# EUROPÄISCHE PATENTSCHRIFT

(11) **EP 0 631 082 B1**
(45) Veröffentlichungstag und Bekanntmachung des Hinweises auf die Patenterteilung: **12.08.1998**
(21) Anmeldenummer: 94107222.5
(22) Anmeldetag: 09.05.1994
(51) Int. Cl.: F16L 25/00

(54) **Verbindung zwischen zwei Rohren**
Connection between two pipes
Connexion entre deux tuyaux

(30) Priorität: 24.06.1993 DE 4321072
(43) Veröffentlichungstag der Anmeldung: 28.12.1994
(73) Patentinhaber: BSH Bosch und Siemens Hausgeräte GmbH, 81669 München (DE)
(72) Erfinder: Cieslik, Detlef, D-89537 Giengen (DE); Maier, Roland, Dipl.-Ing. (FH), D-73450 Neresheim (DE); Rupp, Alexander, Dipl.-Ing. (FH), D-89567 Sontheim-Bergenweiler (DE)

(56) Entgegenhaltungen:
- DE-B- 1 242 646
- GB-A- 1 512 961
- US-A- 4 135 740

## Beschreibung

Die Erfindung betrifft eine Verbindung zwischen zwei Rohren, die zum Zweck ihrer Verbindung ineinandergesteckt und miteinander verbunden sind, wobei die Einstecktiefe des einen Rohres in das andere durch einen am eingesteckten Rohr angeordneten Anschlag begrenzt ist.

Derartige Rohrverbindungen finden beispielsweise auch bei Verdampfern von Kühl- und Gefriergeräten Anwendung, wenn es darum geht, daß zur Entspannung des flüssigen Kältemittels dienende Kapillarrohr an das Kanalsystem eines Verdampfers anzuschließen, wobei ersteres zum Zwecke seines Anschlusses aufgrund seiner Außenabmessungen über eine bestimmte Länge in das Kanalsystem des Verdampfers eingeführt wird. Dabei gilt es zu beachten, daß das freie, eingeschobene Ende nicht zu lang gewählt wird, da sonst das mit hoher Energie aus dem Kapillarrohr austretende Kältemittel dieses Ende derart in Schwingungen versetzt, daß es an den Kanalwandungen des Kanalabschnittes, von dem es aufgenommen ist, anschlägt und somit eine nahezu ständig arbeitende Geräuschquelle bildet. Eine zu kurz gewählte Einstecktiefe hätte u.U. zur Folge, daß ein die Verbindung zwischen dem Kapillarrohr und dem Kanalsystem des Verdampfers bewirkendes Bindemittel, wie beispielsweise flüssiger Kleber oder Lot, infolge von Kapillarkräften erzeugten Fluß den Rohrquerschnitt des Kapillarrohrs zumindest teilweise zusetzen könnte.

Um dies zu vermeiden, ist man dazu übergegangen, die Einstecklänge des Kapillarrohrs in den Kältemittelkanal auf ein definiertes Maß zu begrenzen, um sicher zu stellen, daß einerseits die das Geräusch verursachenden Auslenkungen des Kapillarrohrs aufgrund des austretenden Kältemittelstroms durch die Aufnahmestelle des Kapillarrohrs im Kältemittelkanal aufgefangen werden und andererseits die Möglichkeit des Zusetzens des Kapillarrohrs nicht gegeben ist.

Als die Einstecktiefe des Kapillarrohrs begrenzende Maßnahme wurde hierzu bereits vorgeschlagen, dieses mit einer Abkröpfung auszustatten, daß die eingesteckte Länge des Kapillarrohrs in den Kältemittelkanal stets die gleiche ist. Problematisch bei dieser Art von Einstecktiefen-Begrenzung ist allerdings, daß durch die Abkröpfung der innere Rohrquerschnitt des Kapillarrohrs verengt wird, wodurch sich die Geschwindigkeit des Kältemittelstromes an dieser Stelle erhöht. Dies hat zur Folge, daß oftmals deutlich hörbare, unangenehme Strömungsgeräusche entstehen.

Eine weitere Einstecktiefen-Begrenzung für ein in eine Führungsrohre eingestecktes Kapillarrohr ist aus dem DE-GM 89 05 478 bekannt. Darin wird vorgeschlagen, daß Führungsrohr entlang seines Umfangs mit einer beispielsweise als Sicke ausgeführten Einprägung zu versehen, wodurch das Material der Rohrwandung einen Anschlag für das eingesteckte Kapillarrohr bildend, in den freien Querschnitt des Innendurchmessers des Führungsrohres gedrängt ist.

Weiterhin ist aus der DE-B-12 42 646 eine Rohrverbindung zwischen einem Verdampfer-Saugrohr und einem an der Verdampferplatine angeordneten Anschlußkanal bekannt, wobei die Rohrverbindung zwischen dem Anschlußkanal des Verdampfers und dem Verdampfer-Saugrohr dadurch hergestellt ist, daß letzeres in den Anschlußkanal eingesteckt ist. zur Begrenzung der Einstecktiefe des Verdampfer-Saugrohrs ist dieses mit einem gegenüber seinem äußeren Umfang vorstehenden Wulst versehen, der als Anschlag beim Einstecken des Verdampfer-Saugrohrs in den Abschlußkanal dient.

All diesen Lösungsvorschlägen ist gemeinsam, daß der die Einstecktiefe der beiden Rohre ineinander begrenzende Anschlag durch eine den freien Durchflußquerschnitt verändernde Rohrwandverformung eine der beiden miteinander zu verbindenden Rohre bewerkstelligt ist. Eine derartige Verformung wirkt sich zumindest, infolge der sich plötzlich ändernden Strömungsgeschwindigkeit an dieser Stelle, geräuschfördernd aus.

Der Erfindung liegt die Aufgabe zugrunde, bei einer Rohrverbindung der eingangs genannten Art den Anschlag zur Begrenzung der Einstecktiefe so zu gestalten, daß auf einfache Weise die Nachteile des Standes der Technik vermieden sind.

Die Aufgabe wird gemäß der Erfindung durch die Merkmale von Anspruch 1 gelöst.

Durch die erfindungsgemäße Lösung ist vor allem sichergestellt, daß der ursprünglich vorhandene Durchflußquerschnitt auch nach Anformung des Anschlags erhalten ist, so daß bei Durchströmung des Rohres, z.B. mit flüssigem Kältemittel hoher Geschwindigkeit unangenehme Geräuschentwicklungen vermieden sind. Des weiteren zeichnet sich diese Lösung noch dadurch aus, daß durch die einfache Erzeugung des Anschlags eine kostengünstige Stecktiefenbegrenzung geschaffen ist, wodurch eine reproduzierbare und auch kontrollierbare Einstecktiefe erreicht ist.

Nach einer weiteren, bevorzugten Ausführungsform des Gegenstandes der Erfindung ist vorgesehen, daß das eingesteckte Rohr im Bereich seiner zur Erzeugung des Anschlags dienenden Verformungsstellen von die Querschnittsform und die Querschnittsfläche des Innendurchmessers des eingesteckten Rohres im wesentlichen erhaltenden Stützmitteln abgestützt ist.

Diese Lösung zeichnet sich dadurch aus, daß der Verformungsvorgang aufgrund der deutlich geringeren Anforderung an die Positioniergenauigkeit der Verformungswerkzeuge wesentlich rascher und somit kostengünstiger ausgeführt werden kann.

Besonders stabil ausgeführt und mit hoher Genauigkeit hergestellt werden kann die den Anschlag bildende plastische Formgebung, wenn nach einer weiteren vorteilhaften Ausgestaltung des Gegenstandes der Erfindung vorgesehen ist, daß die den Anschlag bildende plastische Formgebung durch partielles Anquetschen des äußeren Umfangs der Rohrwandung gebildet ist.

Gemäß einer nächsten vorteilhaften Ausgestaltung des Gegenstandes der Erfindung ist vorgesehen, daß die den Anschlag bildende plastische Formgebung durch Spanverformen des äußeren Umfangs der Rohrwandung gebildet ist.

Diese Lösung zeichnet sich vor allem durch ihre äußerst preisgünstige Herstellung aus.

Nach einer weiteren bevorzugten Ausführungsform des Gegenstandes der Erfindung ist vorgesehen, daß zwei durch plastische Formgebung erzeugte Anschläge vorgesehen sind, die einen Winkel von 180° zwischen sich einschließen.

Der Vorteil einer derartigen Lösung ist darin zu sehen, daß auf bei nicht exakter Anpassung des Außendurchmessers des eingesteckten Rohres auf den Innendurchmesser des das Einstecken erlaubenden Rohres eine parallele Ausrichtung der Rohrachsen mit relativ hoher Genauigkeit gewährleistet ist.

Die Erfindung ist in der nachfolgenden Beschreibung anhand von zwei in der Zeichnung vereinfacht dargestellten Ausführungsbeispielen erläutert. Es zeigen:
- Fig. 1: in einem ersten Ausführungsbeispiel ausschnittsweise eine teilweise in Schnittansicht dargestellte Rohrverbindung, deren einzelne Rohrabschnitte an der Verbindungsstelle ineinandergesteckt sind, wobei die Einstecktiefe durch Anschläge an der Rohrwandung des eingesteckten Abschnitts begrenzt ist, in vergrößertem Maßstab und
- Fig. 2: in einem zweiten Ausführungsbeispiel eine Rohrverbindung ähnlich der in Fig. 1 dargestellten, bei der jedoch die Einstecktiefe des eingesteckten Rohrabschnitts begrenzenden Anschläge auf andere Art erzeugt sind.

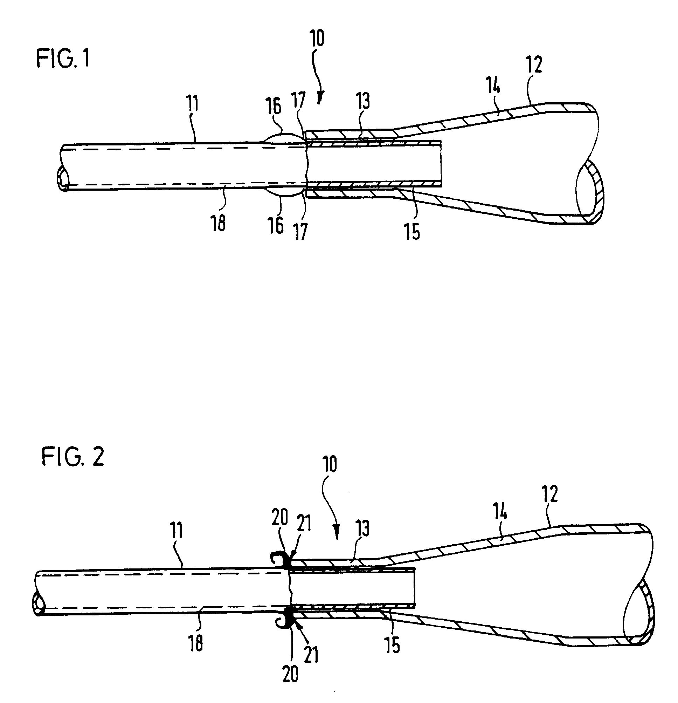

Gemäß Fig. 1 ist eine bei einem nicht gezeigten Kältegerät in Anwendung kommende Rohrverbindung 10 dargestellt, die aus zwei an der Verbindungsstelle durch Ineinanderstecken zusammengefügte Rohrabschnitte 11 und 12 gebildet ist von denen der mit 11 bezeichnete Rohrabschnitt als den Verflüssiger des Kältegeräts nachgeschaltetes, als Drosselorgan dienendes Kapillarrohr ausgebildet und in den anderen Rohrabschnitt 12, der als Trocknerpatrone dient, eingesteckt ist. Letztere weist eine zylindrischen Teil 13 und einen daran anschließenden, sich kegelartig erweiternden Teil 14 auf, wobei der zylinderische, zur Aufnahme eines Rohrstummels 15 des Rohrabschnitts 11 dienende Teil 13 hinsichtlich seines Innendurchmessers zur Erzielung gewisser Führungseigenschaften an der Fügestelle auf den Außendurchmesser des Rohrstummels 15 annähernd abgestimmt ist. Die Führungsluft ist dabei so ausgelegt, daß sich über den Umfang der beiden zusammenwirkenden Durchmesser der Rohrstummel 15 und des zylindrischen Teils 13 ein Kapillarspalt ausbilden kann, in den sich das die Verbindung an der Fügestelle bewirkende Bindemittel von Lötzinn oder Klebstoff kapillarisch saugt.

Um die Überlappung des Rohrstummels 15 und des zylindrischen Teils 13 an der Fügestelle auf ein gewisses Maß zu begrenzen, sind am eingesteckten, mit dem Rohrstummel 15 versehenen Rohrabschnitt 11 ein dessen Einstecktiefe in den Rohrabschnitt 12 begrenzende, einen Winkel von 180° zwischen sich einschließende kreissegmentartige Anschläge 16 angeordnet, deren Anschlagflächen 17 durch die dem eingesteckten Rohrstummel 15 des Rohrabschnittes 11 zugewandten Abschnitte der Kreissegmente gebildet sind und mit der ihnen zugewandten Stirnfläche des zylindrischen Teils 13 zusammenwirken. Die Anschläge 16 am eingesteckten Rohrabschnitt 11 sind aus am äußeren Umfang seiner Rohrwandung 18 angeordneten partiellen plastischen Verformungen des Wandmaterials im wesentlichen im Nahbereich des äußeren Umfangs und senkrecht zur Achse des Rohrabschnitts 11 durch Anquetschen mit anschließendem Verdichten des Wandungsmaterials gebildet. Aus Gründen einer beschleunigten Herstellung der Anschläge 16 können die zu ihrer Erzeugung einer plastischen Verformung unterzogenen Bereiche des Rohrabschnitts 11 mit in Form von Hilfswerkzeugen ausgebildeten, nicht dargestellten Stützmitteln abgestützt werden. Letztere werden vor jedem Verformungsvorgang und über dessen Dauer hinweg, zur Erzeugung der Abstützung in den durch den Innendurchmesser des Rohrabschnitts 11 bestimmten freien Rohrdurchlaß eingebracht und weisen die Querschnittform und die Querschnittsfläche des Innendurchmessers des eingesteckten Rohrabschnitts 11 auf.

In Figur 2 ist eine weitere Ausführungsform von die Einstecktiefe des Rohrabschnitts 11 in den Rohrabschnitt 12 begrenzenden Anschlägen 20 dargestellt, welche durch Spanverformen in Achsrichtung des Rohrabschnitts 11 über eine die Länge des Rohrstummels 15 ausmachende Länge erzeugt werden, wobei deren an der Stirnseite des zylindrischen Teils 13 des Rohrabschnitts 12 anschlagenden Anschlagsflächen 21 aus Stabilitätsgründen im Bereich der Spanwurzel liegen und dem eingesteckten Rohrstummel 15 des Rohrabschnitts 11 zugekehrt sind. Zur Erzeugung der Anschläge 20 wird ein Schneidwerkzeug entlang der Achse des Rohrabschnitts 11 in entsprechender Tiefe des Wandstärkenmaterials der Rohrwandung 18 geführt, um durch den abgetragenen Span formstabile Anschläge 20 zu erzeugen.

## Patentansprüche

1. Verbindung (10) zwischen zwei Rohren (11, 12), die zum Zweck ihrer Verbindung ineinandergesteckt und miteinander verbunden sind, wobei die Einstecktiefe des einen Rohrs (11) in das andere durch einen am eingesteckten Rohr (11) angeordneten Anschlag (16, 20) begrenzt ist, welcher zumindest aus einer den ursprünglichen Durchlaßquerschnitt des Rohres (11) erhaltenden, partiellen plastischen Formgebung am äußeren Umfang der Rohrwandung des eingesteckten Rohres (11) durch eine ausschließliche Materialwanderung des verformten Wandmaterials zum äußeren Umfang der Rohrwandung (18) hin erzeugt ist.

2. Verbindung zwischen zwei Rohren nach Anspruch 1, **dadurch gekennzeichnet,** daß das eingesteckte Rohr (11) im Bereich seiner zur Erzeugung des Anschlags (16, 20) dienenden Verformungsstellen von die Querschnittsform und die Querschnittsfläche des Innendurchmessers des eingesteckten Rohres (11) im wesentlichen erhaltenden Stützmitteln abgestützt ist.

3. Verbindung zwischen zwei Rohren nach Anspruch 1 oder 2, **dadurch gekennzeichnet,** daß die den Anschlag (16) bildende plastische Formgebung durch partielles Anquetschen des äußeren Umfangs der Rohrwandung (18) gebildet ist.

4. Verbindung zwischen zwei Rohren nach Anspruch 1 oder 2, **dadurch gekennzeichnet,** daß die den Anschlag (20) bildende plastische Formgebung durch Spanverformen des äußeren Umfangs der Rohrwandung (18) gebildet ist.

5. Verbindung nach einem der Ansprüche 1 bis 4, **dadurch gekennzeichnet,** daß zwei durch plastische Formgebung erzeugte Anschläge (16, 20) vorgesehen sind, die einen Winkel von 180° zwischen sich einschließen.

## Claims

1. Connection (10) between two pipes (11, 12), which for the purpose of their connection are plugged into one another and connected together, wherein the plug-in depth of one pipe (11) into the other is limited by an abutment (16, 20) which is arranged at the plugged-in pipe (11) and which is produced at least from a partial plastic shaping, which maintains the original throughflow cross-section of the pipe (11), at the outer circumference of the pipe wall of the plugged-in pipe (11) by an exclusive material displacement of the deformed wall material towards the outer circumference of the pipe wall (18).

2. Connection between two pipes according to claim 1, characterised thereby that the plugged-in pipe (11) is supported in the regions of its deformation locations, which serve for generation of the abutment (16, 20), by support means substantially maintaining the cross-sectional shape and the cross-sectional area of the inner diameter of the plugged-in pipe (11).

3. Connection between two pipes according to claim 1 or 2, characterised thereby that the plastic shaping forming the abutment (16) is formed by partial crushing of the outer circumference of the pipe wall (18).

4. Connection between two pipes according to claim 1 or 2, characterised thereby that the plastic shaping forming the abutment (16) is formed by cutting shaping of the outer circumference of the pipe wall (18).

5. Connection according to one of claims 1 to 4, characterised thereby that two abutments (16, 20), which are produced by plastic shaping and which include an angle of 180° therebetween, are provided.

## Revendications

1. Connexion (10) entre deux tuyaux (11, 12), qui sont insérés l'un dans l'autre et reliés l'un avec l'autre afin de réaliser leur connexion, la profondeur d'insertion du premier tuyau (11) dans l'autre étant limitée par une butée (16, 20) disposée sur le tuyau inséré (11), laquelle est produite au moins par une formation plastique partielle sur le périmètre extérieur de la paroi de tuyau du tuyau inséré (11) conservant le diamètre de passage originel du tuyau (11), par une migration matérielle exclusive du matériau de paroi déformé vers le périmètre extérieur de la paroi de tuyau (18).

2. Connexion entre deux tuyaux selon la revendication 1, caractérisée en ce que le tuyau inséré (11) est appuyé dans la zone de ses points de déformation servant à la réalisation de la butée (16, 20) par des moyens d'appui conservant principalement la forme de section et la surface de section du diamètre intérieur du tuyau inséré (11).

3. Connexion entre deux tuyaux selon la revendication 1 ou 2, caractérisée en ce que la formation plastique formant la butée (16) est réalisée par serrage partiel du périmètre extérieur de la paroi de tuyau (18).

4. Connexion entre deux tuyaux selon la revendication 1 ou 2, caractérisée en ce que la formation plastique formant la butée (20) est réalisée par déformation à copeaux du périmètre extérieur de la paroi de tuyau (18).

5. Connexion selon l'une quelconque des revendications 1 à 4; caractérisée en ce que deux butées (16, 20) produites par formation plastique sont prévues, qui comprennent un angle de 180° entre elles.
